# EUROPEAN PATENT SPECIFICATION

(11) **EP 2 170 985 B1**
(45) Date of publication and mention of the grant of the patent: **19.06.2019**
(21) Application number: 08796292.4
(22) Date of filing: 18.07.2008
(51) Int. Cl.: C08K 5/05, C08L 83/04, C08K 3/00, C08K 3/34, C09D 183/04, C08K 3/01

(54) **SILICONE COATINGS, METHODS OF MAKING SILICONE COATED ARTICLES AND COATED ARTICLES THEREFROM**
SILIKONBESCHICHTUNGEN, VERFAHREN ZUR HERSTELLUNG SILIKONBESCHICHTETER ARTIKEL UND BESCHICHTETE ARTIKEL DARAUS
REVÊTEMENTS DE SILICONE, PROCÉDÉS DE PRÉPARATION D'OBJETS REVÊTUS DE SILICONE ET OBJETS REVÊTUS ISSUS DE CEUX-CI

(30) Priority: 19.07.2007 US 950619 P
(43) Date of publication of application: 07.04.2010
(73) Proprietor: Imerys Talc America, Inc., Greenwood Village, CO 80111 (US)
(72) Inventor: WUU, Fuushern, Englewood, CO 80111 (US)
(74) Representative: Rushton, David John
(86) International application number: PCT/US2008/070453
(87) International publication number: WO 2009/012440

(56) References cited:
- EP-A2- 0 754 737
- WO-A1-2005/068569
- US-A- 5 708 046
- US-A1- 2004 161 618
- US-A1- 2005 137 321
- US-A1- 2007 087 207
- US-A1- 2007 167 563
- US-B2- 6 545 076
- US-B2- 6 562 469
- WIKIPEDIA: "Contact angle", INTERNET CITATION, 30 July 2013 (2013-07-30), XP007922126, Retrieved from the Internet: URL:http://en.wikipedia.org/wiki/Contact_a ngle [retrieved on 2013-08-20]
- SHANG J ET AL: "Comparison of different methods to measure contact angles of soil colloids", JOURNAL OF COLLOID AND INTERFACE SCIENCE, ACADEMIC PRESS, NEW YORK, NY, US, vol. 328, no. 2, 15 December 2008 (2008-12-15), pages 299-307, XP025611671, ISSN: 0021-9797, DOI: 10.1016/J.JCIS.2008.09.039 [retrieved on 2008-09-20]

## Description

### CROSS REFERENCE TO RELATED APPLICATIONS

The present application claims priority under 35 U.S.C. § 119(e) from U.S. Provisional Application Serial No. 60/950,619, filed July 19, 2007, entitled "Silicone Coating Mixtures", to Wuu.

### FIELD OF THE INVENTION

This invention relates to coatings providing a release layer between a base stock and an adhesive.

### BACKGROUND OF THE INVENTION

Silicone coatings are used as a release coating for adhesives and other sticky materials. Silicone coatings are typically formulated from three common types of silicone resins: solvent-based silicone resins; solventless silicone resins; and emulsion-based silicone resins. The silicone coatings formulated from these silicone resins provide a layer of protection between a base stock (such as paper) and an adhesive, such that articles layered on the adhesive and the base stock can be easily removed from the base stock. Silicone release coating compositions are for example known from US 2007/0167563, US 2007/0087207, US 2004/0161618, US 6,562,469 and US6,545,076.

Typically, silicone coatings are formulated without, or with small quantities of a filler. Since the silicone resin is typically more expensive than the filler, the lack, or small quantity, of a low cost filler within the silicone coating renders the silicone coatings relatively expensive.

However, there have been some attempts to include pigment fillers in a waterborne silicone coating composition. For example, U.S. Patent No. 4,383,062 to Saad et al., describes an emulsion composition that comprises (i) a silicone resin, (ii) a combination of emulsifying agents effective for dispensing the resin in a water based emulsion, and (iii) an effective amount of water for providing a preselected silicone resin solids content by weight in the resin-water emulsion. The silicone emulsion composition is added in 50 to 70 parts by weight to 25 to 50 parts by weight of pigment, which may include talc. Saad is limited to silicone emulsion mixtures and is only able to achieve up to 50 parts by weight of pigment in the composition.

Ideally, the filler should reduce the cost of silicone coating while maintaining performance features, such as, adhesive, viscosity, workability, and release properties. Typically, greater filler loading levels, which maintain performance features, are more desirable. The addition of fillers to solvent and solventless silicone release coatings has been problematic.

### SUMMARY OF THE INVENTION

These and other needs are addressed by the various embodiments and configurations of the present invention. The present invention is directed generally to silicone coatings, and methods of making coated articles and coated articles therefrom. The present invention is defined in and by the appended claims.

One aspect of the present invention is a silicone coating composition useful as a release coating with an adhesive, the silicone coating composition comprising between about 5 wt% and about 80 wt% inorganic hydrophobic mineral filler comprising particles and between about 20 wt% and about 95 wt% silicone resin. The inorganic hydrophobic mineral filler comprises talc which has not been modified by a hydrophobic surface modification. In a preferred embodiment, the inorganic hydrophobic mineral filler comprises from about 10 wt% to about 70 wt% of the silicone coating composition. In a more preferred embodiment of the present invention, the inorganic hydrophobic mineral filler comprises from about 20 wt% to about 60 wt% of the silicone coating composition. In an even more preferred embodiment, the inorganic hydrophobic mineral filler comprises about 40 wt% of the silicone coating composition.

In another preferred embodiment, the silicone coating composition has a viscosity less than about 20,000 centipoise (20 Pa·s) at about 25 °C, in a more preferred embodiment the silicone coating composition has a viscosity of less than about 10,000 centipoise (10 Pa·s) at about 25 °C. In an even more preferred embodiment of the present invention the silicone coating composition has a viscosity from about 50 centipoise (0.05 Pa·s) to about 20,000 centipoise (20 Pa·s) at about 25 °C.

The hydrophobic mineral filler of the silicone coating composition can be selected from the group consisting of clays, calcium carbonates, dolomites, micas, alumina trihydrates, magnesium hydroxides, titanium dioxides, barium sulfates, silicas, alkali metal aluminosilicates, talcs, alkaline-earth metal aluminosilicates, phyllosilicate minerals, and mixtures thereof. The inorganic hydrophobic mineral filler comprises talc.

In one embodiment, the inorganic hydrophobic mineral filler is formed by one of surface treatment, bulk treatment or compounding of an inorganic hydrophilic material.

The inorganic hydrophobic mineral filler comprises particles. In a more preferred embodiment, at least 50 wt% of the inorganic hydrophobic particles have a particle size of less than about 45 µm. In another preferred embodiment, the inorganic hydrophobic mineral filler can have a contact angle with water that is at least about 90°, and the more preferred contact angle with water that is at least about 120°. In yet another preferred embodiment, the inorganic hydrophobic mineral filler has a moisture content of less than about 45 wt%.

The silicone resin can be selected from the group consisiting of vinyl silicone, hexenyl silicone, and mixtures thereof. In some embodiments the silicone resin further comprises a hydride-functional cross-linker and a catalyst. In other embodiments the silicone resin can be treated by a process selected from the group consisting of thermal setting and energy setting. The silicone resin can be selected from solvent-based silicone resins, emulsified silicone resins, and solventless silicone resins, and in preferred embodiments is a solventless silicone resin.

Another aspect of the present invention is a coated article comprising a release substrate and the silicone coating composition in contact with the release substrate. In a preferred embodiment, the inorganic hydrophobic mineral filler of the coated article is talc.

The release substrate can be selected from the group consisting of papers, plastic films, metal films, foils, parchments, glassines, super-calendered krafts, clay-coated krafts, poly-coated krafts, non-woven materials, woven materials, cardboards, aluminum foils, polyethylene, polypropylene, poly(ethylene terephthalate), polymeric films, and celluolosic-based materials.

Yet another aspect of the present invention is a method of making a coated article comprising applying the silicone coating composition to at least one surface of the release substrate to form the coated article.

In making the coated article, the applying step can be selected from the group consisting of curtain coating, impregnation coating, spray coating, immersion coating, saturation coating, roll coating, slot orifice coating, calendar coating, rotogravure coating, flexo print coating, blade coating, and extrudable coating.

### DETAILED DESCRIPTION OF THE INVENTION

One aspect of the present invention is a silicone coating composition. In one embodiment the silicone coating composition comprises a silicone resin and an inorganic hydrophobic mineral filler.

Silicone resins useful in the present invention can be any suitable silicone resin.

Non-limiting examples of suitable silicone resins include solvent-based silicone resins, emulsified silicone resins, and solventless silicone resins. The term silicone resin refers to any silicone and/or organo-silicone material comprising monomeric, oligomeric and/or polymeric silicone and/or organo-silicone materials. Solvent-based silicone resins are a type of silicone resins. Solvent-based silicone resins have the silicone resin dispersed, dissolved, and/or suspended in a non-aqueous solvent. Emulsified silicone resins are another type of silicone resins. Emulsified silicone resins are typically an aqueous suspension, emulsion and/or dispersion of the silicone resin. Solventless silicone resins commonly comprise a silicone resin with small amounts (that is, typically less than about 5 wt%) of volatile organic and/or aqueous solvents. Thus, the solventless silicone resins comprise from about 100 wt% to about 95 wt % solids. Non-limiting examples of solventless silicone resins are Syl-Off™ silicone resins manufactured by Dow Corning™.

In some embodiments, silicone resins of the present invention comprise a vinyl silicone resin composition having a plurality of-Si-CH=CH₂ groups. The vinyl silicone resins can comprise at least about 60 wt% dimethyl, methylvinyl siloxane, dimethylvinyl terminated resin and about from 1 wt % to about 5 wt% dimethyl siloxane, dimethylvinyl terminated resin. The viscosity of such vinyl-functional silicone resins can be from about 150 centipoise (0.15 Pa·s) to about 1,500 centipoise (1.5 Pa·s) and the specific gravity at about 25 °C can be from about 0.97 to about 1.0

In other embodiments, silicone resins of the present invention comprise a hexenyl silicone resin composition having a plurality of -Si-CH₂-CH₂- CH₂- CH₂-CH=CH₂ groups. The hexenyl silicone resins can comprise at least about 60 wt% dimethyl, methylhexenyl siloxane, dimethylhexenyl terminated resin. The hexenyl silicone resins can have a viscosity from about 200 centipoise (0.2 Pa·s) to about 2,500 centipoise (2.5 Pa·s) and a specific gravity at about 25 °C from about 0.95 to about 1.0.

It can be appreciated that silicone coating compositions of the present invention comprising a silicone resin and an inorganic hydrophobic mineral filler can include combinations of two or more silicone resins.

Silicone resins may contain crosslinkers, catalysts, inhibitors, release modifiers, and process aides (such as, but not limited to, high-speed processing aids). Non-limiting examples of typical silicone crosslinkers are hydride-functional crosslinkers. Hydride crosslinkers cure the silicone resin by an addition reaction in the presence of heat and/or energy.

Typical catalysts for crosslinking silicone resins are, without limitation, platinum-catalysts, low platinum-catalysts, rhodium-catalysts, and tin-catalysts. The silicone resins typically cure and/or crosslink by thermal and/or energy processes (such as, but not limited to electromagnetic energy, ultraviolet light, or electron beam).

Silicone coating compositions of the present invention can include the silicone resin in a range of amounts. In one embodiment of the present invention, the silicone resin comprises from about 20 wt% to about 95 wt% of the silicone coating composition. In a preferred embodiment, the silicone resin comprises from about 30 wt% to about 80 wt% of the silicone coating composition. In a more preferred embodiment, the silicone resin comprises from about 40 wt% to about 70 wt% of the silicone coating composition. In an even more preferred embodiment, the silicone resin comprises about 60 wt% of the silicone coating composition.

Another component of silicone coating compositions of the present invention is an inorganic hydrophobic mineral filler. As used herein, the inorganic hydrophobic mineral filler is typically a particulate substance mixed, dispersed and/or suspended in the silicone resin. In one embodiment, the mixture, dispersion and/or suspension of the inorganic hydrophobic mineral filler in the solventless silicone resin is formed in the absence of emulsifiers, surfactants, or dispersants. The hydrophobic nature of the mineral filler allows it to mix well with the silicone resin and form a coating of uniform consistency and appearance. The hydrophobic nature of the mineral filler can be characterized in some embodiments by having a contact angle with water of at least about 90 °. Preferably, the inorganic hydrophobic mineral filler has a contact angle with water of at least about 100°, more preferably the contact angle with water is at least about 120°.

Another characteristic of the hydrophobic mineral filler in some embodiments is that at least about 50 wt% of the inorganic hydrophobic mineral filler has a particle size of less than about 45 µm. In a preferred embodiment, at least about 80 wt% of the inorganic hydrophobic mineral filler has a particle size of less than about 45 µm. In another embodiment, at least about 50 wt% of the inorganic hydrophobic mineral filler has a particle size of less than about 75 µm, and preferably at least about 80 wt% of the inorganic hydrophobic mineral filler has a particle size of less than about 75 µm. Conformance of the hydrophobic mineral filler with the foregoing characteristics can help provide a silicone coating composition that is uniform in consistency and appearance because of a relative absence of large particles. In addition, in some instances it has been observed that, within the foregoing constraints, smaller size particles are generally preferred in lower quantities. The smaller size particles commonly increase the viscosity of the silicone coating composition more than larger size particles. Stated another way, preferably the 80 wt% of the inorganic hydrophobic mineral filler with a particle size of less than about 45 µm has a Gaussian particle size distribution typically encompassing more larger size particles than smaller size particles. It has been found that, typically a mixture of particle sizes where at least about 80 wt% of the inorganic hydrophobic mineral filler particles have a particle size of less than about 45µm has a statistical distribution of smaller and larger size particles suitable for dispersing and/or suspending the inorganic hydrophobic filler in the silicone resin.

It has also been found that, the moisture content of the inorganic hydrophobic mineral filler may affect the dispersibility and/or suspensibility of the inorganic hydrophobic mineral filler in the silicone resin. In general, the greater the moisture content of the inorganic hydrophobic mineral material the less mixable, dispersible and/or suspendible the inorganic hydrophobic mineral filler is within the silicone resin. Preferably, the moisture content of the inorganic hydrophobic mineral filler is less than about 45 wt%. More preferably, the moisture content of the inorganic hydrophobic mineral filler is less than about 20 wt%.

In various embodiments, the inorganic hydrophobic mineral filler comprises in its native state an inorganic hydrophobic and/or a hydrophilic mineral. Examples of suitable inorganic hydrophobic and/or hydrophilic minerals include without limitation clays, calcium carbonates, dolomites, micas, alumina trihydrates, magnesium hydroxides, titanium dioxides, barium sulfates, silicas, alkali metal aluminosilicates, talcs, alkaline-earth metal aluminosilicates, phyllosilicate minerals, and mixtures thereof. Phyllosilicate minerals can include, without limitation, antigorite [Mg₃Si₂O₅(OH)₄], chrysotile [Mg₃Si₂O₅(OH)₄], lizardite [Mg₃Si₂O₅(OH)₄], kaolinite [Al₂Si₂O₅(OH)₄], talc [Mg₃Si₄O₁₀(OH)₂], pyrophyllite [Al₂Si₄O₁₀(OH)₂], muscovite (KAl₂(AlSi₃O₁₀)(OH)₂], phlogopite [KMg₃Si₄O₁₀(OH)₂], biotite [K(Mg,Fe)₃(AlSi₃O₁₀)(OH)₂], lepidolite [K(Li,Al)₂₋₃(AlSi₃O₁₀)(OH)₂], margarite [CaAl₂(Al₂Si₂O₁₀)(OH)₂], or chlorite [(Mg,Fe)₃(Si,Al)₄O₁₀(OH)₂•(Mg,Fe)3(OH)₆], and mixtures thereof.

The inorganic mineral filler comprises talc, and has not been modified by a hydrophobic surface modification. In some embodiments, the (unmodified) talc does not require a dispersant or a surfactant to wet and/or disperse the talc in the silicone resin.

Another important property of the inorganic hydrophobic mineral filler is chemical stability. The inorganic hydrophobic mineral filler is chemically stable within the silicone resin. That is, the inorganic hydrophobic mineral filler and the silicone resin do not typically chemically react to form a product which substantially affects (such as, degrades and/or diminishes) the functional properties of the silicone coating.

In some embodiments, the inorganic hydrophobic mineral filler can be formed by one or more of surface treatment, bulk treatment or compounding of the inorganic hydrophilic mineral to render the inorganic hydrophilic mineral hydrophobic. Non-limiting examples of such treatments for rendering an inorganic hydrophilic mineral hydrophobic (or for increasing the hydrophobicity of the inorganic hydrophobic mineral) are: reducing the moisture content (such as, by heating to reduce its moisture content); adsorbing one or more chemical entities (such as, an oil or surfactant); absorbing one or more chemical entities (such as, an oil or surfactant); chemically and/or physically increasing the hydrophobic nature of the surface (such as, oxidizing and/or reducing the surface or changing the chemical substitutes of the surface), and compounding (such as, blending hydrophobic and hydrophilic minerals to achieve a desired level of hydrophobicity).

Silicone coating compositions of the present invention can include the inorganic hydrophobic mineral filler in a range of amounts. In one embodiment of the present invention, the inorganic hydrophobic mineral filler comprises from about 5 wt% to about 80 wt% of the silicone coating composition. In a preferred embodiment, the inorganic hydrophobic mineral filler comprises from about 10 wt% to about 70 wt% of the silicone coating composition. In a more preferred embodiment, the inorganic hydrophobic mineral filler comprises from about 20 wt% to about 60 wt% of the silicone coating composition. In an even more preferred embodiment, the inorganic hydrophobic mineral filler comprise from about 40 wt% of the silicone coating composition.

Additionally, in various embodiments of the present invention, the silicone coating composition has release and viscoelastic properties that are not significantly affected by the presence of the inorganic hydrophobic mineral filler. For example, the silicone resin with and without the inorganic hydrophobic mineral filler have substantially the same physical (such as, viscosity and release properties) and can be processed and/or utilized substantially similarly.

In one embodiment, the release properties of the silicone coating composition are typically substantially maintained, that is, the silicone resin with and without the inorganic hydrophobic mineral filler typically have substantially about the same release properties. In some embodiments, the ratio of the release property of the silicone resin with the inorganic hydrophobic mineral filler to the silicone resin without the inorganic hydrophobic mineral filler is from about 0.01 to about 100, in other embodiments, from about 0.01 to about 75, from about 0.02 to about 50, from about 0.04 to about 25, from about 0.1 to about 10, from about 0.2 to about 5, from about 0.5 to about 2, from about 0.7 to about 1.5, from about 0.8 to about 1.3, and from about 0.9 to about 1.1. While not wanting to be bound by any theory, the release force of a typical pressure sensitive adhesive having the silicone coating composition applied thereto is less than about 1,000 grams/25 mm at a delamination speed of about 0.3 m/min, preferably less 500 grams/25 mm. More preferably, the release force of a typical adhesive having the silicone coating composition applied thereto is less than about 250 grams/25 mm at a delamination speed of about 0.3 m/min.

In other embodiments of the present invention, the silicone coating composition has a viscosity that is not significantly affected by the presence of the inorganic hydrophobic mineral filler. For example, the silicone resin-containing composition of the present invention with the inorganic hydrophobic mineral filler can have substantially the same viscosity as the silicone resin without any inorganic hydrophobic mineral filler and can be processed substantially similarly. In some embodiments, the viscosity of the silicone resin with the inorganic hydrophobic mineral filler is less than about 100 times as great as the viscosity of the silicone resin without the inorganic hydrophobic mineral filler, and in other embodiments, less than about 90 times, about 80 times, about 70 times, about 60 times, about 50 times, about 40 times, about 30 times, about 20 times, about 10 times, about 9 times, about 8 times, about 7 times, about 6 times, about 5 times, about 4 times, about 3 times or about 2 times as great as the viscosity of the silicone resin without the inorganic hydrophobic mineral filler. Further, in other embodiments, the viscosity of the silicone resin with the inorganic hydrophobic mineral filler is less than about 1.9 times, about 1.8 times, about 1.7 times, about 1.6 times, about 1.5 times, about 1.4 times, about 1.3 times, about 1.2 times or about 1.1 times as great as the viscosity of the silicone resin without the inorganic hydrophobic mineral filler. In some embodiments, the viscosity of the silicone coating composition is less than about 20,000 centipoise (20 Pa·s). In other embodiments, the viscosity of the silicone coating composition is from about 50 centipoise (0.05 Pa·s) to about 20,000 centipoise (20 Pa·s) at about 25 °C, and in yet other embodiments the viscosity is from about 100 centipoise (0.1 Pa·s) to about 2,000 centipoise (2 Pa·s).

The silicone coating composition may be formed by dispersing, suspending, and/or mixing the inorganic hydrophobic mineral filler in the silicone resin. Non-limiting methods for mixing, dispersing and/or suspending the inorganic hydrophobic mineral filler in the silicone resin are: low shear mixing; high shear mixing; ultrasonic mixing; dispersive mixing; agitating; stirring; and vortex mixing. The mixing, dispersing and/or suspending of the inorganic hydrophobic mineral filler in the silicone resin can be preformed substantially simultaneously with or after the contacting of the inorganic hydrophobic mineral filler with the silicone resin.

Another aspect of the present invention is a coated article comprising a release substrate and the silicone coating composition. In one embodiment, the coated article further comprises an adhesive. The coated article is formed by applying a coating of the silicone coating composition to the release substrate. Typically, the silicone coating composition is applied to a surface release substrate. It can be appreciated that, in some instances the silicone coating composition is applied to more than one surface of the release substrate. In some embodiments of the present invention, the silicone coating composition is applied to the adhesive and/or one or more surfaces of the adhesive, and in other embodiments the silicone coating composition is applied to both the release substrate and the adhesive. The silicone coating composition can be applied to the release substrate by any coating process. Preferably, the silicone coating composition is in contact with at least one of the release substrate and the adhesive. More preferably, the silicone coating composition is positioned between the adhesive and the release substrate and/or in contract with the adhesive and the release substrate.

Examples of suitable coating processes are, without limitation, curtain coating, impregnation coating, spray coating, immersion coating, saturation coating, roll coating, slot orifice coating, calendar coating, rotogravure coating, flexo print coating, blade coating, extrudable coating, and any other coating processes used in the art. Coating weights vary with the coating method and the adhesive and/or release substrate. While not wanting to be bound by any theory, coating weights of the silicone coating composition typically vary from about 0.2 g/m² to about 150 g/m².

The release substrate can be any substrate. Non-limiting examples of suitable release substrates are papers, plastic films, metal films, foils, parchments, glassines, super-calendered krafts, clay-coated krafts, poly-coated krafts, non-woven materials, woven materials, cardboards, aluminum foils, polyethylene, polypropylene, poly(ethylene terephthalate), polymeric films, and cellulosic-based materials.

The adhesive can be any thermoplastic, elastomeric, or thermosetting adhesive. Non-limiting examples of suitable adhesives are: vegetable glues (such as, starch-based glues); resin-based glues (such as, emulsions of ethylene vinyl acetate or poly vinyl acetate); animal/protein glues (such as, but not limited to casein-based glues); remoistenable hot-melts; polyamide hot-melts; reactive hot-melts; polyesters; polyamides; polyurethanes; acrylics; epoxies; silicones; cyanoacrylates; anaerobic adhesives; phenolics; and polyimides.

Although the use of silicone is primarily discussed herein, one skilled in the art will appreciate that oily materials other than silicone may be employed. Specific examples of suitable hydrocarbon oils that may be used in addition to or in place of silicone include paraffin oil, mineral oil, saturated and unsaturated dodecane, saturated and unsaturated tridecane, saturated and unsaturated tetradecane, saturated and unsaturated pentadecane, saturated and unsaturated hexadecane, and mixtures thereof. Branched-chain isomers of these compounds, as well as of higher chain length hydrocarbons, can also be used.

As noted above, the silicone coating composition is typically formulated without emulsifers, surfactants or dispersants. It can be appreciated that, the silicone coating compositions of this invention can optionally comprise one or more functional additives commonly added to silicone release coatings without departing from the scope thereof. Examples of functional additives include without limitation heat and ultraviolet light stabilizers, secondary plasticizers, antiblocking agents, colorants, anti-oxidants, slip agents, nucleating agents, gloss stabilizers, anti-scuff agents, etc. The optional functional additives typically comprise up to about 5 wt% of the silicone coating composition.

As noted above, the silicone coating composition of the present invention is expected to be useful in a variety of backing sheets for use with adhesive labels. In addition, the low viscosity of the silicone coating composition is a low cost, high speed coating alternative to the extrusion coating of polymers like polyethylene and nylon.

Additional objects, advantages, and novel features of this invention will become apparent to those skilled in the art upon examination of the following examples thereof, which are not intended to be limiting. For example, those skilled in the art would recognize that the silicone coating composition of the present invention can also be formulated with solvent-based and emulsion-based silicone resins.

### EXAMPLES

### Example 1

Talc having a median particle size of 19.8 µm was formulated with a silicone emulsion for up to a weight ratio of 80% talc/20% silicone emulsion. This silicone coating composition had a similar viscosity as that of the 100% silicone emulsion, thus it should require little or no modification to the coating process. The viscosity of the silicone coating composition was less than about 20,000 centipoise (20 Pa·s). If a higher coating viscosity is tolerated, higher than 80 wt% talc/20 wt% silicone emulsion ratios could also be achieved.

Talc wetted and dispersed well in the silicone emulsion. When this silicone coating composition was coated onto a paper sheet, its appearance was as smooth as that of the 100% silicone. No surface modification of talc was needed; and no dispersant or surfactant was needed to wet and disperse talc into the silicone emulsion.

Talc products of finer particle sizes had more effect in increasing the viscosity of the silicone-talc coating. This could limit the amount of talc in the silicone coating composition if there is a desire to maintain the same coating viscosity as the 100% silicone emulsion.

A delaminated clay (a hydrophilic material) was also formulated with the same silicone emulsion . Unlike talc, clay did not disperse well into the silicone emulsion. The silicone coating composition appeared lumpy and produced a rough surface when coated onto a paper.

### Example 2

Talc having a median particle size of 19.8 µm was formulated with a silicone emulsion for up to a weight ratio of 60% talc/40% silicone emulsion. This emulsion had a similar viscosity as that of the 100% silicone emulsion, thus it should require little or no modification to the coating process. The viscosity of the silicone coating composition was less than about 10,000 centipoise (10Pa·s). If a higher coating viscosity is tolerated, higher than 60 wt% talc/40 wt% silicone emulsion ratios could also be achieved.

Talc wetted and dispersed well in the silicone emulsion. When this silicone coating composition was coated onto a paper sheet, its appearance was as smooth as that of the 100% silicone. No surface modification of talc was needed; and no dispersant or surfactant was needed to wet and disperse talc into the silicone emulsion.

Talc products of finer particle sizes had more effect in increasing the viscosity of the silicone-talc coating. This could limit the amount of talc in the silicone coating composition if there is a desire to maintain the same coating viscosity as the 100% silicone emulsion.

A delaminated clay (a hydrophilic material) was also formulated with the same silicone emulsion. Unlike talc, clay did not disperse well into the silicone emulsion. The silicone coating composition appeared lumpy and produced a rough surface when coated onto a paper.

### Example 3

Talc having a median particle size of 19.8 µm was formulated with a solvent-based silicone resinfor up to a weight ratio of 80% talc/20% solvent-based silicone resin. This composition had a similar viscosity as that of the 100% solvent-based silicone resin, thus it should require little or no modification to the coating process. If a higher coating viscosity is tolerated, higher than 80 wt% talc/20 wt% solvent-based silicone resin ratios could also be achieved.

Talc wetted and dispersed well in the solvent-based silicone resin. When this silicone coating composition was coated onto a paper sheet, its appearance was as smooth as that of the 100% solvent-based silicone resin. No surface modification of talc was needed; and no dispersant or surfactant was needed to wet and disperse talc into the solvent-based silicone resin.

Talc products of finer particle sizes had more effect in increasing the viscosity of the silicone-talc coating. This could limit the amount of talc in the silicone coating composition if there is a desire to maintain the same coating viscosity as the 100% solvent-based silicone resin.

A delaminated clay (a hydrophilic material) was also formulated with the same solvent-based silicone resin. Unlike talc, clay did not disperse well into the solvent-based silicone resin. The silicone coating composition appeared lumpy and produced a rough surface when coated onto a paper.

### Example 4

Talc having a median particle size of 19.8 µm was formulated with a solventless silicone resin for up to a weight ratio of 40% talc/60% solventless silicone resin. This composition had a similar viscosity as that of the 100% solventless silicone resin, thus it should require little or no modification to the coating process. If a higher coating viscosity is tolerated, higher than 60 wt% talc/40 wt% solventless silicone resin ratios could also be achieved.

Talc wetted and dispersed well in the solventless silicone resin. When this silicone coating composition was coated onto a paper sheet, its appearance was as smooth as that of the 100% solventless silicone resin. No surface modification of talc was needed; and no dispersant or surfactant was needed to wet and disperse talc into the solventless silicone resin.

Talc products of finer particle sizes had more effect in increasing the viscosity of the silicone-talc coating. This could limit the amount of talc in the silicone coating composition if there is a desire to maintain the same coating viscosity as the 100% solventless silicone resin.

A delaminated clay (a hydrophilic material) was also formulated with the same solventless silicone resin. Unlike talc, clay did not disperse well into the solventless silicone resin. The silicone coating composition appeared lumpy and produced a rough surface when coated onto a paper.

The foregoing description of the present invention has been presented for purposes of illustration and description. Furthermore, the description is not intended to limit the invention to the form disclosed herein. Consequently, variations and modifications commensurate with the above teachings, and the skill or knowledge of the relevant art, are within the scope of the present invention. The embodiment described hereinabove is further intended to explain the best mode known for practicing the invention and to enable others skilled in the art to utilize the invention in such, or other, embodiments and with various modifications required by the particular applications or uses of the present invention. It is intended that the appended claims be construed to include alternative embodiments to the extent permitted by the prior art.

## Claims

1. A silicone coating composition useful as a release coating with adhesives, comprising:
a) between 5 wt% and 80 wt% inorganic hydrophobic mineral filler comprising particles; and
b) between 20 wt% and 95 wt% silicone resin;
wherein the inorganic hydrophobic mineral filler comprises talc which has not been modified by a hydrophobic surface modification, optionally mixed with at least one material selected from clays, calcium carbonates, dolomites, micas, alumina trihydrates, magnesium hydroxides, titanium dioxides, barium sulfates, silicas, alkali metal aluminosilicates, alkaline-earth metal aluminosilicates, phyllosilicate minerals, and mixtures thereof.

2. The composition of claim 1, wherein the inorganic hydrophobic mineral filler comprises from 10 wt% to 70 wt% of the silicone coating composition.

3. The composition of claim 1, wherein the inorganic hydrophobic mineral filler comprises from 20 wt% to 60 wt% of the silicone coating composition.

4. The composition of claim 1, wherein the inorganic hydrophobic mineral filler comprises about 40 wt% of the silicone coating composition.

5. The composition of claim 1, wherein the silicone resin is selected from the group consisting of vinyl silicone, hexenyl silicone, and mixtures thereof.

6. The composition of claim 5, wherein the silicone resin further comprises a hydride-functional cross-linker and a catalyst.

7. The composition of claim 5, wherein the silicone resin has been treated by a process selected from the group consisting of thermal setting and energy setting.

8. The composition of claim 1, wherein the silicone resin is a solventless silicone resin.

9. A coated article, comprising:
a) a release substrate; and
b) a silicone coating composition in accordance with any one of claims 1 to 8 comprising a silicone resin and an inorganic hydrophobic mineral filler wherein the coating is in contact with the release substrate.

10. The coated article of claim 9, wherein the inorganic hydrophobic mineral filler is talc.

11. The coated article of claim 9 or 10, wherein the release substrate is selected from the group consisting of papers, plastic films, metal films, foils, parchments, glassines, super-calendered krafts, clay-coated krafts, poly-coated krafts, non-woven materials, woven materials, cardboards, aluminium foils, polyethylene, polypropylene, poly(ethylene terephthalate), polymeric films, and cellulosic-based materials.

12. A method of making a coated article according to any one of claims 9-11 comprising applying a silicone coating composition comprising a silicone resin and an inorganic hydrophobic mineral filler to at least one surface of a release substrate to form the coated article.

## Patentansprüche

1. Als Trennbeschichtung für Klebstoffe geeignete Silikonbeschichtungszusammensetzung, umfassend:
a) zwischen 5 und 80 Gewichtsprozent Partikel umfassende anorganische hydrophobe mineralische Füllstoffe und
b) zwischen 20 und 95 Gewichtsprozent Silikonharz;
wobei der anorganische hydrophobe mineralische Füllstoff Talk umfasst, der nicht durch eine hydrophobe Oberflächenmodifizierung modifiziert und gegebenenfalls mit mindestens einem der nachfolgend genannten Stoffen gemischt wurde: Tonerden, Calciumcarbonate, Dolomite, Glimmer, Aluminiumoxidtrihydrate, Magnesiumhydroxide, Titandioxide, Bariumsulfate, Siliciumdioxide, Alkalimetallaluminosilikate, Erdalkalimetallaluminosilikate, Schichtsilikatmineralien und Mischungen davon.

2. Zusammensetzung gemäß Anspruch 1, wobei der anorganische hydrophobe mineralische Füllstoff 10 bis 70 Gewichtsprozent der Silikonbeschichtungszusammensetzung ausmacht.

3. Zusammensetzung gemäß Anspruch 1, wobei der anorganische hydrophobe mineralische Füllstoff 20 bis 60 Gewichtsprozent der Silikonbeschichtungszusammensetzung ausmacht.

4. Zusammensetzung gemäß Anspruch 1, wobei der anorganische hydrophobe mineralische Füllstoff etwa 40 Gewichtsprozent der Silikonbeschichtungszusammensetzung ausmacht.

5. Zusammensetzung gemäß Anspruch 1, wobei das Silikonharz ausgewählt ist aus Vinylsilikon, Hexenylsilikon und Mischungen davon.

6. Zusammensetzung gemäß Anspruch 5, wobei das Silikonharz weiterhin ein hydridfunktionelles Vernetzungsmittel und einen Katalysator umfasst.

7. Zusammensetzung gemäß Anspruch 5, wobei das Silikonharz durch ein Verfahren behandelt wurde, bei dem es sich um thermische oder energetische Härtung handelt.

8. Zusammensetzung gemäß Anspruch 1, wobei das Silikonharz ein lösungsmittelfreies Silikonharz ist.

9. Beschichteter Artikel, umfassend:
a) ein Trennsubstrat; und
b) eine Silikonbeschichtungszusammensetzung gemäß einem der Ansprüche 1 bis 8, die ein Silikonharz und einen anorganischen hydrophoben mineralischen Füllstoff umfasst, wobei die Beschichtung das Trennsubstrat berührt.

10. Beschichteter Gegenstand gemäß Anspruch 9, wobei es sich bei dem anorganischen hydrophoben mineralischen Füllstoff um Talk handelt.

11. Beschichteter Gegenstand gemäß Anspruch 9 oder 10, wobei das Trennsubstrat ausgewählt wird aus: Papieren, Kunststofffolien, Metallfilmen, Folien, Pergamenten, Pergaminen, hochsatinierten Kraftpapieren, barytbeschichteten Kraftpapieren, mehrfach beschichteten Kraftpapieren, ungewebten Werkstoffen, gewebten Werkstoffen, Pappen, Aluminiumfolien, Polyethylen, Polypropylen, Poly(Ethylen-Polyterephthalat), Polymerfilmen und Werkstoffen auf Zellulosebasis.

12. Verfahren zur Herstellung eines beschichteten Gegenstandes gemäß einem der Ansprüche 9 bis 11, umfassend mindestens eine Oberfläche des Trennsubstrats mit einer Silikonbeschichtungszusammensetzung aus Silikonharz und einem anorganischen hydrophoben mineralischen Füllstoff zur Bildung des Gegenstandes beschichten.

## Revendications

1. Une composition de revêtement de silicone utile comme un revêtement antiadhésif avec des adhésifs, comprenant :
a) entre 5 % en poids et 80 % en poids d'une charge minérale hydrophobe inorganique comprenant des particules ; et
b) entre 20 % en poids et 95 % en poids de résine de silicone ;
dans laquelle la charge minérale hydrophobe inorganique comprend du talc qui n'a pas été modifié par une modification de surface hydrophobe, éventuellement mélangé avec au moins un matériau sélectionné parmi les argiles, les carbonates de calcium, les dolomites, les micas, les trihydrates d'alumine, les hydroxydes de magnésium, les dioxydes de titane, les sulfates de baryum, les silices, les aluminosilicates de métaux alcalins, les aluminosilicates de métaux alcalino-terreux, les minéraux de phyllosilicate et leurs mélanges.

2. La composition selon la revendication 1, dans laquelle la charge minérale hydrophobe inorganique comprend de 10 % en poids à 70 % en poids de la composition de revêtement de silicone.

3. La composition selon la revendication 1, dans laquelle la charge minérale hydrophobe inorganique comprend de 20 % en poids à 60 % en poids de la composition de revêtement de silicone.

4. La composition selon la revendication 1, dans laquelle la charge minérale hydrophobe inorganique comprend environ 40 % en poids de la composition de revêtement de silicone.

5. La composition selon la revendication 1, dans laquelle la résine de silicone est sélectionnée dans le groupe constitué par la silicone vinylique, la silicone hexénylique et leurs mélanges.

6. La composition selon la revendication 5, dans laquelle la résine de silicone comprend en outre un agent de réticulation à fonctionnalité hydrure et un catalyseur.

7. La composition selon la revendication 5, dans laquelle la résine de silicone a été traitée par un procédé sélectionné dans le groupe constitué par le réglage thermique et le réglage énergétique.

8. La composition selon la revendication 1, dans laquelle la résine de silicone est une résine de silicone sans solvant.

9. Un article revêtu, comprenant :
a) Un substrat antiadhésif ; et
b) une composition de revêtement de silicone selon l'une quelconque des revendications 1 à 8 comprenant une résine de silicone et une charge minérale hydrophobe inorganique dans laquelle le revêtement est en contact avec le substrat anti-adhésif.

10. L'article revêtu selon la revendication 9, dans lequel la charge minérale hydrophobe inorganique est du talc.

11. L'article revêtu selon la revendication 9 ou 10, dans lequel le substrat anti-adhésif est sélectionné dans le groupe constitué par les papiers, les films plastiques, les films métalliques, les feuilles, les parchemins, les glassines, les krafts super-calandrés, les krafts revêtus d'argile, les krafts à plusieurs revêtements, les matériaux non tissés, les matériaux tissés, les cartons, les feuilles en aluminium, les polyéthylènes, les polypropylènes, les poly(éthylènes téréphtalates), les films polymères et les matériaux à base de cellulose.

12. Un procédé de fabrication d'un article revêtu selon l'une quelconque des revendications 9 à 11 comprenant l'application d'une composition de revêtement de silicone comprenant une résine de silicone et une charge minérale hydrophobe inorganique sur au moins une surface d'un substrat antiadhésif pour former l'article revêtu.
